Europäisches Patentamt

European Patent Office

Office européen des brevets

(19)

(11) Publication number: **0 169 514 B1**

# EUROPEAN PATENT SPECIFICATION

(12)

(45) Date of publication of patent specification: **03.04.91**   (51) Int. Cl.⁵: **G11B 23/087**

(21) Application number: **85109071.2**

(22) Date of filing: **19.07.85**

(54) **Magnetic tape cassette with reel-lock mechanism.**

(30) Priority: **21.07.84 JP 151498/84**
**14.05.85 JP 71090/85 U**

(43) Date of publication of application:
**29.01.86 Bulletin 86/05**

(45) Publication of the grant of the patent:
**03.04.91 Bulletin 91/14**

(84) Designated Contracting States:
**AT DE FR GB NL SE**

(56) References cited:
**DE-A- 3 328 299**
**GB-A- 2 020 628**
**GB-A- 2 131 769**

(73) Proprietor: **SONY CORPORATION**
**7-35 Kitashinagawa 6-Chome Shinagawa-ku**
**Tokyo 141(JP)**

(72) Inventor: **Kawada, Hideaki**
**c/o Sony Corp. 7-35, Kitashinagawa, 6-chome**
**Shinagawa-ku Tokyo(JP)**
Inventor: **Ike, Kazuo**
**c/o Sony Corp. 7-35, Kitashinagawa, 6-chome**
**Shinagawa-ku Tokyo(JP)**
Inventor: **Nemoto, Tsuneo c/o Sony Corp.**
**7-35 Kitashinagawa 6-chome**
**Shinagawa-ku Tokyo(JP)**
Inventor: **Ohmori, Kiyoshi c/o Sony Corp.**
**7-35 Kitashinagawa 6-chome**
**Shinagawa-ku Tokyo(JP)**

(74) Representative: **Schmidt-Evers, Jürgen,**
**Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J. Schmidt-**
**Evers Dipl.-Ing. W. Melzer Steinsdorfstrasse**
**10**
**W-8000 München 22(DE)**

**Description**

BACKGROUND OF THE INVENTION

The present invention relates generally to a magnetic tape cassette, especially to a tape cassette for a video tape recorder. More specifically, the invention relates to a reel-lock mechanism for locking the tape reels in the tape cassette of any diameter.

As is well known, tape cassettes, especially tape cassettes for video tape recorders, which will be hereafter referred to as "VTR tape cassette", can accommodate various lengths of magnetic tape, such as VTR tapes, within cassette casings of a single size designed to accommodated the longest desired length of magnetic tape. This necessarily leaves unnecessary empty space when a relatively short tape is housed in the cassette cover.

In the recent years, portable VTR systems have strived to be as compact as possible. This consideration naturally applies also to VTR tape cassettes. To satisfy this requirement, one approach has been to provide cassette covers of various sizes accommodating specific lengths of tape wcund onto tape reels of a corresponding diameter. For instance, for a short tape, such as for a 10-minute recording, a small-diameter tape reel is used. In this case, a small cassette cover which will be referred to hereafter as "S size cassette cover" is used to housing the small-diameter tape reel. For a longer tape, such as for a 90-minute recording, a large-diameter tape reel and a large cassette casing, which is referred to as "L-size cassette casing", are used. Similarly, for a medium-length tape, such as for a 60-minute recording, a medium-diameter tape reel and medium-size cassette casing, which will be referred to as "M size cassette casing", are used.

Tape drive system intended for use with various sizes of the tape reels and cassette casings must be adapted to deal with a broad range of cassette casing and tape handling requirements. For example, VTR systems capable of handling various sizes of VTR tape cassettes employ adjustable reel bases capable of driving tape reels of various size.

Such tape cassette product lines also require reel lock mechanisms for preventing the tape reels from rotating while the tape cassette are not in use. A known device discloses a tape reel lock mechanism in which the tape reels are released to be free to rotate by a vertical pin within the play-back unit, such as VTR player unit. A similar pin-actuated reel lock release has also been disclosed in Japanese Utility Model First Publication (Jikkai) Showa 58-114578, published on August 5, 1983. When such conventional reel lock release mechanisms are adapted for use with tape cassettes of various sizes, a plurality of lock-release pins are required. For instance, when S-, M-, L-size cassettes are all to be used, three lock-release pins are required due to different positions of the reel lock mechanisms of the different cassettes. In this case, the L-size cassette must have two extra holes simply to accommodate the pins for reel lock release for S- and M-size cassettes. To allow for the hole accommodating the pin for reel lock release for S-size cassettes, the tape reels of an L-size cassette must be inconveniently separated.

SUMMARY OF THE INVENTION

The present invention is intended to facilitate use of various sizes of tape cassette without the problems encountered in the conventional art.

Therefore, it is an object of the present invention to provide a tape cassette with a reel lock mechanism which does not require a lock-release pin extending into the tape cassette.

Another object of the invention is to provide a reel lock mechanism which unlocks the reel lock mechanism when the tape cassette is inserted into a cassette holder of a recording and reproducing apparatus, such as a VTR player.

In detail, the invention concerns a magnetic tape cassette comprising:
a cassette casing; and
a pair of tape reels onto which a magnetic tape is wound;
first locking members cooperating with said tape reels for rotation therewith;
a pair of second locking members located within an area adjacent the rear end of said cassette casing, each cooperating with said first locking members to establish locking engagement with the latter so as to prevent said tape reels from rotating, said second locking members being pivotable in a first direction to establish said locking engagement and in a second direction to release said locking engagement;
a biasing means biasing said second locking member in said first direction; and
a first lock releasing means cooperating with said second locking members to actuate said second locking members in said second direction,

Such a magnetic tape cassette is disclosed in the GB-A 20 20 628.

In order to accomplish the above-mentioned objects, the invention provides the features in the characterizing part of claim 1, namely in that a guide projecting from said floor of said cassette casing guides movement of said first lock releasing means, and
in that said guide comprises an impression projecting into the interior of the tape cassette casing and defining a guide groove on the lower surface of the floor of said tape cassette casing, and in that said first lock releasing means comprises a projection extending into said guide groove and abutting an actuating projection integral to said recording and reproducing apparatus, whereby said first lock releasing means actuates said second locking member in said second position as the cassette is inserted in said recording and reproduction apparatus.

From the DE-A-33 28 299 is known a projection projecting through the wall of a tape cassette and cooperating with an actuating member of a recording/reproducing apparatus.

The GB-A-2l 31 769 shows a guide member projecting the floor of the cassette casing and guiding the movement of the lock releasing means.

Other features of the invention are contained in the subclaims 2 to 9.

## BRIEF DESCRIPTION OF THE DRAWINGS

The present invention will be understood from the detailed description given herebelow and from the accompanying drawings of the preferred embodiments of the invention.

In the drawings:

Fig. 1 is a plan view of the first embodiment of a tape cassette according to the invention, which is shown with the upper cover of the cassette casing removed in order to show the internal structure;

Fig. 2 is an exploded perspective view of the first embodiment of the reel lock mechanism of Fig. 1;

Fig. 3 is an enlarged plan view of part of the tape cassette of Fig. 1, showing the first embodiment of a reel lock mechanism according to the present invention;

Fig. 4 is a section taken along line IV-IV of Fig. 3;

Figs. 5A and 5B are sections similar to Fig. 3, but showing the second embodiment of reel lock mechanism according to the invention, in which Fig. 5A shows the reel lock mechanism in its locked position, and Fig. 5B shows the reel lock mechanism in its released position;

Fig. 6 is an exploded perspective view of the second embodiment of the reel lock mechanism of Figs. 5A and 5B; and

Fig. 7 is a cross-section through the second embodiment of the tape cassette as loaded in an associated play-back unit, such as a VTR system.

## DESCRIPTION OF THE PREFERRED EMBODIMENT

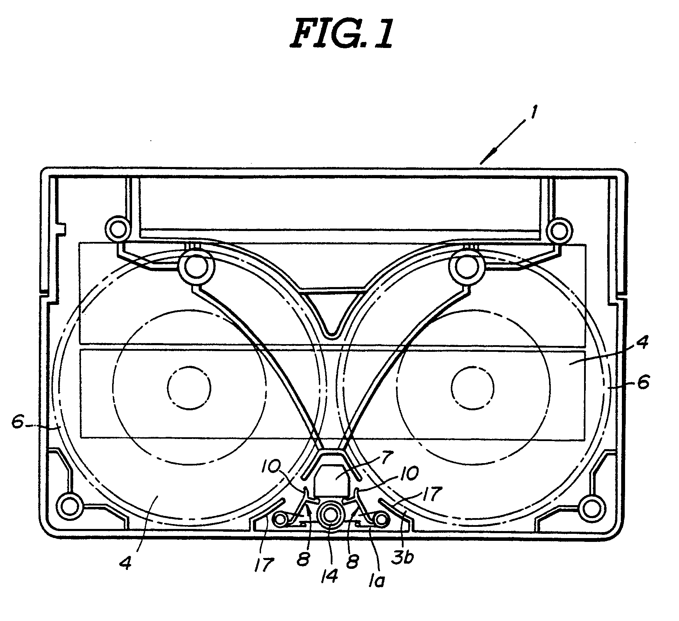

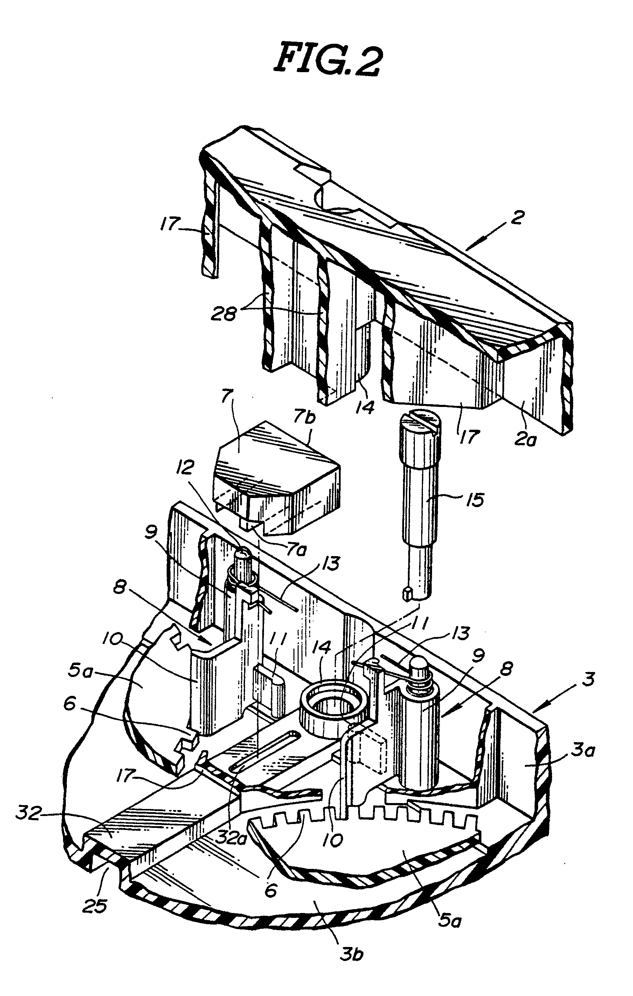

Referring now to the drawings, particularly to Figs. 1 to 4, a tape cassette casing 1 comprises an upper cover 2 and a lower cover 3. A pair of tape reels 5 are housed in the tape cassette casing 1. Each of the tape reels 5 has a lower flange 5a which has locking teeth 6 arranged about its periphery. The upper and lower covers 2 and 3 are formed with mating ribs 17. The ribs 17 are located near the rear of the cassette casing, i.e. distal from the tape-access window, and are integral to the rear walls 2a and 3a of the upper and lower covers 2 and 3. The ribs 17 have sections curved so as to be concentric to the tape reels 5. The ribs 17 and the rear walls 2a and 3a of the upper and lower covers 2 and 3 define a space 1a within the cassette casing 1.

A slider 7 on the floor 3b of the lower cover 3 is free to slide forward and rearward along a guide projection 32 extending from the floor. The guide projection 32 comprises an upward impression extending upwardly from the floor. The impression, in turn, defines a guide groove 25 extending frontwards and rearwards. The slider 7 has a downward projection 7a extending through an elongated slot 32a. The guide groove 25 also receives an upward projection provided in the recording and reproducing apparatus as the hardwear, such as VTR player unit. In practice, the upward projection is provided on the floor of a cassette holder in the recording and reproducing apparatus and extends frontwards and rearwards in transverse center of the cassette casing.

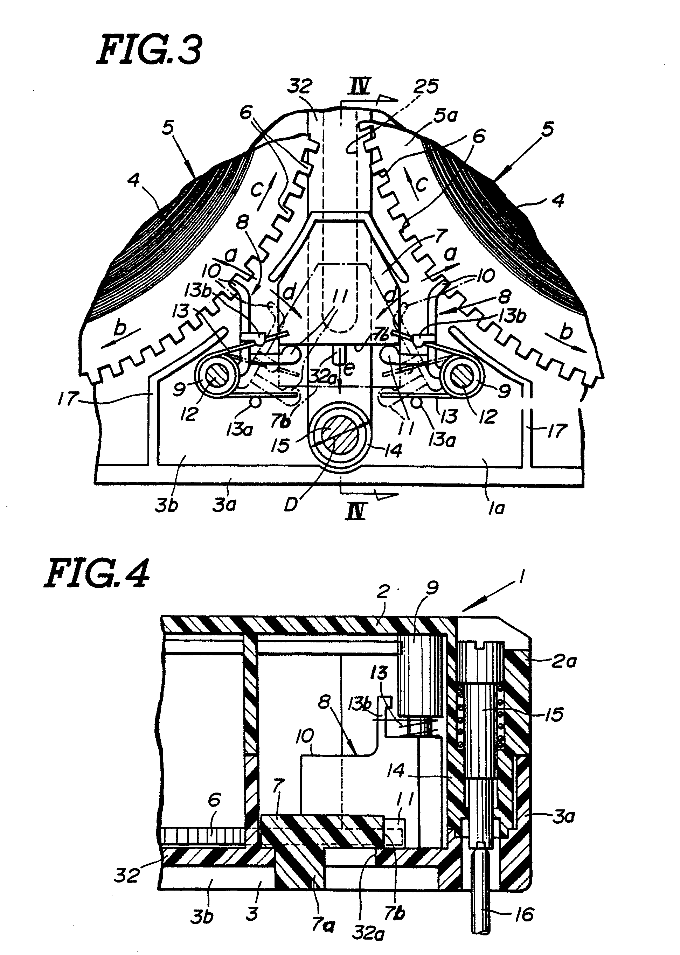

A pair of reel lock levers 8 are located to either side of the slider 7. Each of the reel lock levers 8 has a boss section 9, a locking claw 10 and a transverse strip 11. The boss section 9 of the reel lock lever 8 pivotably engages a pivot pin 12 formed integrally with the lower cover 3 and extending upwardly from its floor 3b. A torsion spring 13 is wound around the pin 12. One end of the torsion spring 13 is seated on a pin or projection 13a extending from the upper cover 2. The other end of the torsion spring 13 is seated on a projection 13b extending from the locking claw 10. Thus, the torsion spring 13 exerts biasing force in the direction a of Fig. 3 on the locking claw 10. In the position shown in Fig. 3, which shows the tape cassette when not in use, the tape reel lock engages the tape reel 5 to prevent rotation of the latter. The position illustrated in Fig. 3 will be referred to hereafter as "reel locking position". In this reel locking position, the free end of the transverse strip 11 contacts with the rear edge 7b of the slider 7.

Hollow cylindrical extensions 14 are formed on the upper and lower covers 2 and 3. The extensions 14 of the upper and lower covers 2 and 3 are aligned with each other and form a hollow cylindrical shell when the covers 2, 3 engage. A tape condition indicative plug 15 is accommodated within the extensions 14. The position of the plug 15 within the extensions 14 indicates tape conditions, such as prerecorded or blank, etc. The plug position may be detected by an appropriate plug position detecting means built in a play-back unit, such as VTR system. For example, a conventional detector pin 16 in the VTR system can be used as plug position detecting means.

In the reel lock position of Fig. 3, when rotational force is applied so as to tighten the tape as shown by the arrows c, the locking claw 10 are kicked out of engagement in the direction d against the spring force of the torsion spring 13 so as to allow tape reel rotation. When the force is released, the locking claws 10 re-engaged to prevent unwanted loosening.

When the tape cassette is loaded into a play-back unit, e.g. VAT system, the slider 7 engages an appropriate reel lock releasing means (not shown). The reel lock release means moves the slider 7 rearward as shown by the arrow e in Fig. 3. Rearward movement of the slider 7 exerts a force on the transverse strips 11 in the direction e so as to release the locking claws 10 from the locking teeth 6 in the direction e. Therefore, the tape reel becomes free to rotate in either direction.

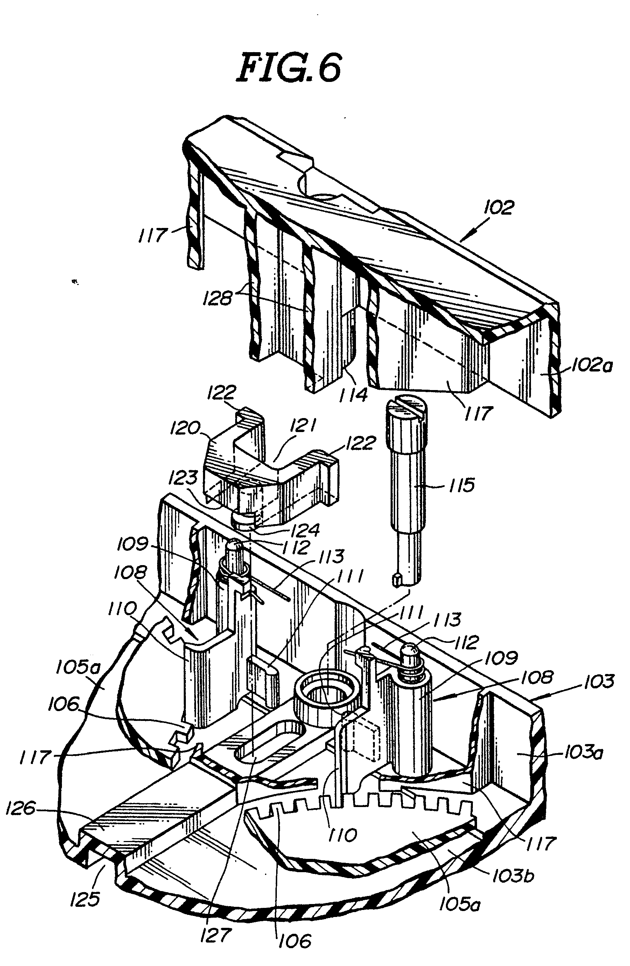

Figs. 5A, 5B, 6 and 7 show the second embodiment of the tape cassette according to the present invention. In this second embodiment, a slider 120 is formed with a cut-out 121 in its rear edge. The cut-out 121 is wider than the diameter D of cylindrical extensions 114 receiving the tape condition indicative plug 115. The cut-out 121 is essentially square. Outward-projecting tabs 122 at the ends of the rear edge of the slider 120 form part of the reel lock release mechanism. The lower surface of the slider 120 also has a central cut-out 123 which extends from the cut-out 121 to its forward edge (refer to Fig. 6). The width of the cut-out 123 is essentially the same as that of the cut-out 121. A guide pin 124 extends downwards from the upper wall of the slider 120 through the cut-out 123.

The lower surface of the floor 103b of the lower cover 103 of the cassette casing 101 has a guide groove 125 extending front-to-rear. The guide groove 125 is reflected in a raised impression 126 extending front-to-rear along the floor 103b inside the casing. The cut-out 123 of the slider 120 engages the impression 126 so as to be free to slide therealong. An elongated hole 127 is formed through the impression 126. The guide pin 124 of the slider 120 extends through the elongated hole 127 so that its lower end projects into the guide groove 125.

The upper face of the slider 120 contacts a rib 128 formed integrally with the upper cover 102. The rib 128 thus restricts upward movement of the slider 120.

As in the foregoing first embodiment, a pair of locking levers 108 lie to either side of the slider 120. Transverse strips 111 of the locking levers 108 are in contact with the rear end of the slider 120. The locking levers 108 also have locking claws 110 engaging the locking teeth 106 of the flanges 105a of the tape reels 105. Boss sections 109 of the locking lever 108 rotatably engage pivot pins 112. Torsion springs 113 bias the locking levers 108 so as to normally establish locking engagement between the locking claws 110 and the locking teeth 106.

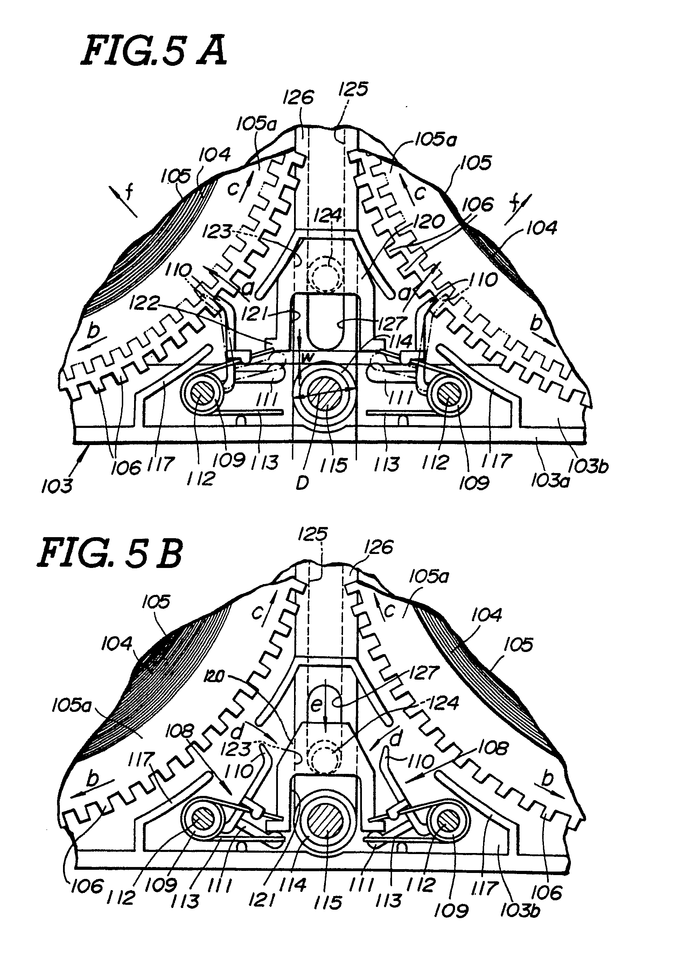

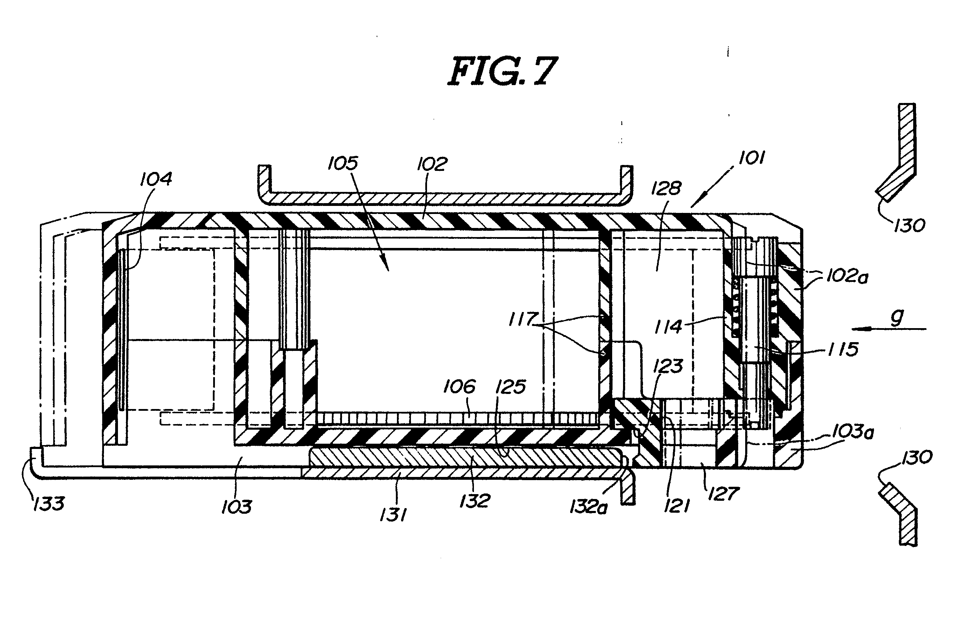

When the tape cassette constructed according to the foregoing second embodiment is loaded into the play-back unit, such as a VTR system, in the direction of arrow g in Fig. 7 through its front access 130, the tape cassette is retained by a cassette holder 131 of the VTR system. The guide groove 125 in the floor of the lower cover 103 engages a guide 132 projecting from the upper surface of the floor of the cassette holder 131. The rear end 132a of the guide 132 abuts the lower end of the guide pin 124. As the tape cassette moves in the direction g, the guide pin 124 is driven rearwards with the slider 120 to the position shown in Fig. 5B. In the position of Fig. 5B, the cylindrical extensions 114 lie within the essentially square cut-out 121 in the slider 120. During this rearward movement, the slider 120 displaces the transverse strips 111 of the locking levers 108 in the lock-release direction. This causes pivotal movement of the locking levers 108 in the direction d. Therefore, the locking claws 109 release from the locking teeth 106.

As is well known, the tape reels 105 orbit within reel hub holes formed in the floor 103b of the lower cover 103, as shown in phantom line in Fig. 5A. According to the shown embodiment, in order to assure locking engagement between the locking levers 108 and the locking teeth 106, the transverse strips 111 of the locking levers 108 are separated from the rear end of the tabs 122 of the slider 120 by a front-to-rear clearance W when the tape reels 105 are located as shown in solid line in Fig. 5A and the locking claws 110 are in engagement with the locking teeth 106. The clearance W between the transverse strips 111 and the rear edges of the tabs allows pivotal movement of the locking claws 110 in the direction a so as to ensure locking engagement between the locking claws 111 and the locking teeth 106 even when the tape reels 105 are shifted to the position shown in phantom line in Fig. 5A.

It should be appreciated that, in the foregoing second embodiments, the elements appearing on Figs. 5A, 5B, 6 and 7 but not disclosed in the disclosure hereabove correspond to the elements of the first embodiments. Such elements have been represented by the reference numerals hundred plus to the reference numerals for the corresponding elements in the first embodiment.

Accordingly, the present invention successfully avoids reel lock releasing pins by providing the slider with externally exposed projection which can be operated from the outside of the tape cassette.

## Claims

1. A magnetic tape cassette comprising:
   a cassette casing (1;101); and
   a pair of tape reels (5; 105) onto which a magnetic tape is wound;
   first locking members (6; 106) cooperating with said tape reels (5; 105) for rotation therewith;
   a pair of second locking members (8; 108) located within an area (1a; 101a) adjacent the rear end (2a, 3a; 102a, 103a) of said cassette casing (1; 101), each cooperating with said first locking members (6; 106) to establish locking engagement with the latter so as to prevent said tape reels (5; 105) from rotating, said second locking members (8; 108) being pivotable in a first direction to establish said locking engagement and in a second direction to release said locking engagement;
   a biasing means (13; 113) biasing said second locking member (8; 108) in said first direction; and
   a first lock releasing means (7; 120) cooperating with said second locking members (8; 108) to actuate said second locking members (8; 108) in said second direction, characterized in that a guide (32; 126) projecting from said floor (3b; 103b) of said cassette casing (1; 101) guides movement of said first lock releasing means (7; 120), and
   in that said guide (32; 126) comprises an impression projecting into the interior of the tape cassette casing (1; 101) and defining a guide groove (25; 125) on the lower surface of the floor (3b; 103b) of said tape cassette casing (1; 101), and in that said first lock releasing means (7; 120) comprises a projection (7a; 124) extending into said guide groove (25; 125) and abutting an actuating projection (132) integral to said recording and reproducing apparatus, whereby said first lock releasing means (7; 120) actuates said second locking member (8;

108) in said second position as the cassette is inserted in said recording and reproduction apparatus.

2. The tape cassette as set forth in claim 1, wherein a claw means (10;110) formed at the end of said second locking member (8;108) and engaging said first locking member (6;106) permits releasing of said second locking member (8;108) from locking engagement with said first locking member (6;106) in response to rotation of said tape reel (5;105) in the direction of tape tightening even when said first lock releasing means (7;120) is inactive.

3. The tape cassette as set forth in claim 1 or 2, wherein said first lock releasing member (7;120) is free to move between a first position in which it permits locking engagement between said first and second locking members (6,8;106,108) and a second position in which said second locking member (8;108) is released from the locking engagement.

4. The tape cassette as set forth in any one of claims 1 to 3, wherein said second locking member (8;108) has an extension (11;111) opposing a rear edge (7b;122) of said first lock releasing member (7;120) and in that rearward movement of said first lock releasing means (7;120) causes pivotal movement of said second locking member (8;108) in said second direction.

5. The tape cassette as set forth in any one of claims 1 to 4, wherein said first locking member comprises a plurality of locking teeth (6;106) aligned about the periphery of a lower flange (5a;105a) of said tape reel (5;105).

6. A magnetic tape cassette as set forth in claim 1, wherein the cassette casing (1;101) has a groove (25;125) in the center of its lower surface extending front-to-rear; the pair of tape reels (5;105) being housed within said cassette casing (1;101) to either side of said groove (25;125), each of said tape reels (5;105) has a hub onto which the magnetic tape is wound and a circular flange (5a,105a) with a plurality of locking teeth (6;106) aligned about its periphery;
   a pair of locking levers (8;108) pivotable about a pair of pivot pins (12;112) rest on the floor of said cassette casing (1,101) on either side of said groove (25;125), each of said locking levers (8;108) pivoting between a locking position in which it fixedly engages said locking teeth (6;106) of a corresponding one of said tape reels (5;105) and an unlocking position wherein it is released from said locking teeth (6;106) so as to permit rotation of said tape reel (5;105);

a slider (7;120) is provided near the rear end of said groove (25;125) and has a downward projection (7a;124) extending into said groove (25;125), said slider (7;120) being free to move between a first position corresponding to said locking position of said locking levers (8;108) and a second position corresponding to said unlocking position of said locking levers (8;108) , said projection (7a;124) cooperating with an actuation member (132) in a recording and reproducing apparatus to move said slider (7;120) to said second position when the tape cassette (1;101) is loaded into the recording and reproducing apparatus.

7.  The tape cassette as set forth in claim 6, wherein said second position of said slider (7;120) is at the rear end of the front-to-rear slider stroke.

8.  The tape cassette as set forth in any one of claims 1 to 7, wherein a tape condition indicator means comprises a hollow cylinder (114) located at the rear end of said groove (125) and a plug (115) disposed within said cylinder (114), which plug (115) is so positioned within said cylinder (114) as to represent the condition of the tape, and said slider (120) has a recess (121) in its rear edge which accommodates said cylinder (114) when said slider (120) is in said second position.

9.  The tape cassette as set forth in any one of claims 6, 7 or 8,
wherein said groove (25;125) is defined by an impression projecting upwards from said floor, and said slider (7;120) engages said impression for sliding movement therealong.

## Revendications

1.  Cassette de bande magnétique comprenant :
une boîte de cassette (1 ; 101) ;
et une paire de bobines de bande (5 ; 105) sur lesquelles une bande magnétique s'enroule ;
des premiers organes de blocage (6 ; 106) qui coopèrent avec lesdites bobines de bande (5 ; 105) pour tourner avec ces dernières ;
une paire de deuxièmes organes de blocage (8 ; 108) logés dans une zone (la ; 101a ) adjacente à l'extrémité arrière (2a, 3a ; 102a, 103a) de ladite boîte (1 ; 101) de la cassette, et dont chacun coopère avec lesdits premiers organes de blocage (6 ; 106) pour établir une prise de blocage avec ceux-ci de manière à empêcher lesdites bobines de bande (5 ; 105) de tourner, lesdits deuxièmes organes de blocage (8 ; 108) pouvant pivoter dans un premier sens pour établir ladite prise de blocage et dans un deuxième sens pour supprimer ladite prise de blocage ;
un moyen de sollicitation (13 ; 113) qui sollicite ledit deuxième organe de blocage (8 ; 108) dans ledit premier sens ; et
un premier moyen de suppression du blocage (7 ; 120) qui coopère avec lesdits deuxièmes organes de blocage (8 ; 108) pour actionner lesdits deuxièmes organes de blocage (8 ; 108) dans ledit deuxième sens,
caractérisé
en ce qu'un guide (32 ; 126) qui fait saillie sur le plancher (3b ; 103b ) de ladite boîte (1 ; 101) de la cassette guide le mouvement dudit premier moyen de suppression du blocage (7 ; 120), et
en ce que ledit guide (32 ; 126) comprend un embouti qui fait saillie dans le volume intérieur de la boîte (1 ; 101) de la cassette de bande et définit une rainure de guidage (105 ; 125) sur la surface inférieure du plan cher (3b ; 103b ) de ladite boîte (1 ; 101) de la cassette de bande, et en ce que ledit premier moyen de suppression du blocage (7 ; 120) comprend une saillie (7 ; 120) qui s'engage dans ladite rainure de guidage (25 ; 125) et bute contre une saillie d'actionnement (132) qui est solidaire dudit appareil d'enregistrement et de reproduction, de sorte que ledit premier moyen de suppression du blocage (7 ; 120) actionne ledit deuxième organe de blocage (8 ; 108) dans ladite deuxième position lorsque la cassette est insérée dans ledit appareil d'enregistrement et de reproduction.

2.  Cassette de bande selon la revendication 1, dans laquelle un moyen formant griffe (10 ;110) formé à l'extrémité dudit deuxième organe de blocage (8 ; 108) et qui est en prise avec ledit premier organe de blocage (6 ; 106) permet de dégager ledit deuxième organe de blocage (8 ; 108) de sa prise de blocage avec ledit premier organe de blocage (6 ; 106) en réponse à la rotation de ladite bobine de bande (5 ; 105) dans le sens du serrage de la bande, même si ledit premier moyen de suppression du blocage (7 ; 120) est inactif.

3.  Cassette de bande selon la revendication 1 ou 2,
dans laquelle ledit premier organe de suppression du blocage (7 ; 120) est libre de se déplacer entre une première position, dans laquelle il permet la prise de blocage entre lesdits premier et deuxième organe de blocage (6, 8 ; 106, 108) et une deuxième position dans laquelle ledit deuxième organe de blocage (8 ; 108) est dégagé de la prise de blocage.

4. Cassette de bande selon une quelconque des revendications 1 à 3,
dans laquelle ledit deuxième organe de blocage (8 ; 108) possède un prolongement (11 ; 111) qui regarde vers un bord arrière (7b ; 122) dudit premier organe de suppression du blocage (7 ; 120), et en ce que le mouvement de recul dudit premier moyen de suppression du blocage (7 ; 120) provoque le mouvement de pivotement dudit deuxième organe de blocage (8 ; 108) dans ledit deuxième sens.

5. Cassette de bande selon une quelconque des revendications 1 à 4,
dans laquelle ledit premier organe de blocage comprend une pluralité de dents de blocage (6 ; 106) alignées le long de la périphérie d'une joue inférieure (5a ; 105a) de ladite bobine de bande (5 ; 105).

6. Cassette de bande magnétique selon la revendication 1,
dans laquelle la boîte (1 ; 101) de la cassette présente une rainure (25 ; 125) au centre de sa surface inférieure, cette rainure s'étendant de l'avant vers l'arrière, les deux bobines de bande (5 ; 105) étant logées dans ladite boîte (1 ; 101) de la cassette de part et d'autre de ladite rainure (25 ; 125), chacune desdites bobines de bande (5 ; 105) possède un moyeu sur lequel la bande magnétique est enroulée et une joue circulaire (5a, 105a) portant une pluralité de dents de blocage (6 ; 106) alignées le long de sa périphérie ;
une paire de leviers de blocage (8 ; 108) qui peuvent pivoter autour d'une paire d'axes pivots (12 ; 112) reposent sur le plancher de ladite boîte de cassette (1 ; 101) de part et d'autre de ladite rainure (25 ; 125), chacun desdits leviers de blocage (8 ; 108) pivotant entre une position de blocage, dans laquelle il est en prise de blocage avec lesdites dents de blocage (6 ; 106) de celle desdites bobines de bande (5 ; 105) qui lui correspond, et une position de déblocage, dans laquelle il est dégagé desdites dents de blocage (6 ; 106) de manière à permettre la rotation de ladite bobine de bande (5 ; 105) ;
un coulisseau (7 ; 120) est prévu dans le voisinage de l'extrémité arrière de ladite rainure (25 ; 125) et possède une saillie pendante (7a ; 124) qui s'engage dans ladite rainure (25

; 125), ledit coulisseau (7 ; 120) étant libre de se déplacer entre une première position, qui correspond à ladite position de blocage desdits leviers de blocage (8 ; 108), et une deuxième position, qui correspond à ladite position de déblocage desdits leviers de blocage (8 ; 108), ladite saillie (7a ; 124) coopérant avec un organe d'actionnement (132) prévu dans un appareil d'enregistrement et de reproduction pour amener ledit coulisseau (7 ; 120) à ladite deuxième position lorsque la cassette de bande (1 ; 101) est chargée dans l'appareil d'enregistrement et de reproduction.

7. Cassette de bande selon la revendication 6,
dans laquelle ladite deuxième position dudit coulisseau (7 ; 120) se trouve à l'extrémité arrière de la course avant-arrière du coulisseau.

8. Cassette de bande selon une quelconque des revendications 1 à 7,
dans laquelle un moyen indicateur d'état de la bande comprend un cylindre creux (114) placé à l'extrémité arrière de ladite rainure (125) et un bouchon (115) disposé dans ledit cylindre (114), lequel bouchon (115) est positionné dans ledit cylindre (114) de manière à représenter l'état de la bande, et ledit coulisseau (120) présente dans son bord arrière un évidement (121) qui reçoit ledit cylindre (114) lorsque ledit coulisseau (120) est dans ladite deuxième position.

9. Cassette de bande selon une quelconque des revendications 6, 7 et 8,
dans laquelle ladite rainure (25 ; 125) est définie par un embouti qui fait saillie vers le haut à partir dudit plancher, et ledit coulisseau (7 ; 120) est en prise avec ledit embouti pour coulisser le long de ce dernier.

**Ansprüche**

1. Magnetbandkassette mit
einem Kassettengehäuse (1; 101),
einem Paar von Bandspulen (5; 105), auf die ein Magnetband aufgewickelt ist,
ersten Verriegelungsgliedern (6; 106), die mit den Bandspulen (5; 105) zusammenwirken und mit diesen rotieren,
einem Paar von zweiten Verriegelungsgliedern (8; 108), die in einem Bereich (1a; 101a) in der Nähe des hinteren Endes (2a, 3a; 102a, 103a) des Kassettengehäuses (1; 101) angeordnet sind, wobei jedes dieser zweiten Verriegelungsglieder mit den ersten Verriegelungsgliedern (6; 106) zusammenwirkt, um einen Verriegelungseingriff mit letzeren herbeizuführen, in dem ein Drehen der Bandspulen (5; 105) verhindert ist, wobei die zweiten Verriegelungsglieder (8; 108) zur Herstellung des Verriegelungseingriffs in einer ersten Richtung und zum Lösen des Verriegelungseingriffs in einer zweiten Richtung verschwenkbar sind,

Vorspannmitteln (13; 113) zum Vorspannen der zweiten Verriegelungsglieder (8; 108) in der genannten ersten Richtung,

und einer ersten Verriegelungs-Löseeinrichtung (7; 120), die mit den zweiten Verriegelungsgliedern (8; 108) zusammenwirkt, um diese in der zweiten Richtung anzutreiben, **dadurch gekennzeichnet,**

daß eine von dem Boden (3b; 103b) des Kassettengehäuses (1; 101) hervorstehende Führung (32; 126) die Bewegung der ersten Verriegelungs-Löseeinrichtung (7; 120) führt,

daß diese Führung (32; 126) eine ins Innere des Kassettengehäuses (1; 101) ragende Einprägung umfaßt, die an der Unterseite des Bodens (3b; 103b) des Kassettengehäuses (1; 101) eine Führungsnut (25; 125) bildet,

und daß die erste Verriegelungs-Löseeinrichtung (7; 120) einen Vorsprung (7a; 124) aufweist, der in die Führungsnut (25; 125) hineinragt und an einem Betätigungsvorsprung (132) zur Anlage kommt, der integraler Bestandteil des entsprechen den Aufnahme- und Wiedergabegeräts ist, derart daß die Verriegelungs-Löseeinrichtung (7; 120) beim Einsetzen der Kassette in das Aufnahme- und Wiedergabegerät die zweiten Verriegelungsglieder (8; 108) in die zweite position bewegt.

2. Bandkassette nach Anspruch 1, bei der an einem Ende jedes der zweiten Verriegelungsglieder (8; 108) ein Klauenteil ausgebildet ist, das in das erste Verriegelungsglied (6; 106) eingreift und beim Drehen der Bandspule 5; 105) in Richtung einer Vergrößerung der Bandspannung auch dann ein Lösen des zweiten Verriegelungsglieds (8; 108) aus dem Verriegelungseingriff mit dem ersten Verriegelungsglied (6; 106) gestattet, wenn die erste Verriegelungs-Löseeinrichtung (7; 120) nicht aktiv ist.

3. Bandkassette nach Anspruch 1 oder 2, bei der die erste Verriegelungs-Löseeinrichtung (7; 120) frei bewegbar ist zwischen einer ersten position, in der sie einen Verriegelungsgliedern (6, 8; 106, 108) gestattet, und einer zweiten Position, in der das zweite Verriegelungsglied (8; 108) aus dem Verriegelungseingriff gelöst ist.

4. Bandkassette nach einem der Ansprüche 1 bis 3, bei der das zweite Verriegelungsglied (8; 108) einen der Hinterkante (7b; 122) der ersten Verriegelungs-Löseeinrichtung (7; 120) gegenüberliegenden Ansatz (11; 111) besitzt, so daß eine Rückwärtsbewegung der ersten Verriegelungs-Löseeinrichtung (7; 120) eine Schwenkbewegung des zweiten Verriegelungsglieds (8; 108) in der zweiten Richtung bewirkt.

5. Bandkassette nach einem der Ansprüche 1 bis 4, bei der das erste Verriegelungsglied mehrere Sperrzähne (6; 106) umfaßt, die auf der Peripherie eines unteren Flansches (5a; 105a) der Bandspule (5; 105) ausgerichtet sind.

6. Bandkassette nach Anspruch 1, bei der
das Kassettengehäuse (1; 101) im Zentrum seiner Unterseite eine von vorn nach hinten verlaufende Nut (25; 125) besitzt,

das Paar von Bandspulen (5; 105) in dem Kassettengehäuse (1; 101) zu beiden Seiten dieser Nut (25; 125) angeordnet ist, wobei jede Bandspule (5; 105) eine Nabe besitzt, auf der das Magnetband aufgewickelt ist, sowie einen kreisförmigen flansch (5a; 105a) mit einer Vielzahl von auf der Peripherie des Flansches ausgerichteten Sperrzähnen (6; 106),

ein Paar von Verriegelungshebeln (8; 108), die um ein Paar von Schwenkzapfen (12; 112) drehbar sind, zu beiden Seiten der Nut (25; 125) auf dem Boden des Kassettengehäuses (1; 101) ruhen, wobei jeder dieser Verriegelungshebel (8; 108) verschwenkbar ist zwischen einer Verriegelungsposition, in der er fest in die Sperrzähne (6; 106) der zugehörigen Bandspule (5; 105) eingreift, und einer Freigabeposition, in der er von den Sperrzähnen (6; 106) gelöst ist und ein Drehen der Bandspule (5; 105) gestattet,

und in der Nähe des hinteren Endes der Nut (25; 125) ein Gleitschieber (7; 120) vorgesehen ist, der einen nach unten weisenden Vorsprung (7a; 124) besitzt, der in die Nut (25; 125) ragt und frei bewegbar ist zwischen einer ersten Position, die der Verriegelungsposition der Verriegelungshebel (8; 108) entspricht, und einer zweiten Position, die der Freigabeposition der Verriegelungshebel (8; 108) entspricht, wobei der Vorsprung (7a; 124) mit einem in einem Aufnahme- und Wiedergabegerät vorgesehenen Antriebsglied (132) zusammenwirkt, um den Gleitschieber (7; 120) in die zweite Position zu bewegen, wenn die Bandkassette (1; 101) in das Aufnahme- und Wiedergabegerät geladen wird.

7. Bandkassette nach Anspruch 6, bei der die zweite Position des Gleitschiebers (7; 120) sich am hinteren Ende der von vorn nach hinten verlaufenden Bewegungsbahn des Gleitschiebers befindet.

8. Bandkassette nach einem der Ansprüche 1 bis 7, bei der ein Bandzustandsindikator vorgesehen ist, der einen am hinteren Ende der Nut (125) liegenden Hohlzylinder (114) und einen in diesem angeordneten Stift (115) umfaßt, der in dem Hohlzylin der (114) so positioniert ist, daß er den Zustand des Bandes anzeigt, und bei der der Gleitschieber (120) in seiner hinteren Kante eine Ausnehmung (121) besitzt, die den Hohlzylinder (114) aufnimmt, wenn der Gleitschieber (120) sich in der zweiten Position befindet.

9. Bandkassette nach einem der Ansprüche 6, 7 oder 8, bei der die Nut (25; 125) von einer von dem Boden nach oben ragenden Einprägung gebildet wird und bei der der Gleitschieber (7; 120) mit dieser Einsprägung so in Eingriff steht, daß er längs derselben gleiten kann.

# FIG. 1

# FIG.2

## FIG.3

## FIG.4

# FIG. 5 A

# FIG. 5 B

# FIG.6

# FIG.7

EP 0 169 514 B1